# EUROPÄISCHE PATENTSCHRIFT

(11) **EP 1 284 226 B1**
(45) Veröffentlichungstag und Bekanntmachung des Hinweises auf die Patenterteilung: **21.06.2006**
(21) Anmeldenummer: 02018447.9
(22) Anmeldetag: 16.08.2002
(51) Int. Cl.: B65G 1/08

(54) **Lagerungseinrichtung**
Storage system
Système de stockage

(30) Priorität: 16.08.2001 DE 10141162
(43) Veröffentlichungstag der Anmeldung: 19.02.2003
(73) Patentinhaber: Adolf Würth GmbH & Co. KG, 74653 Künzelsau (DE)
(72) Erfinder: Hohl, Wolfgang, 74653 Künzelsau-Amrichshausen (DE)
(74) Vertreter: Schöndorf, Jürgen

(56) Entgegenhaltungen:
- US-A- 3 753 507
- US-A- 4 105 126

## Beschreibung

Die Erfindung betrifft eine Einrichtung, mit der Gegenstände gelagert werden können, die etwa zylindrische Gestalt aufweisen, beispielsweise Kartuschen mit Klebe- und Dichtstoffen, Fugenmaterial, sowie Beutelwaren, die ebenfalls eine etwa zylindrische Gestalt haben.

Lagerungseinrichtungen für die unterschiedlichsten Gegenstände sind in vielfältiger Form bekannt. So gibt es beispielsweise Regale mit schräg von hinten nach vorne abfallenden Fachböden, die zum Teil nur aus Winkelprofilen zur Halterung der Kanten von Faltschachteln dienen. Die von hinten nach vorn abfallenden Fachböden haben den Vorteil, dass die Waren immer zur Vorderkante rutschen. Wenn solche Regale vor einer Wand stehen, besteht jedoch der Nachteil, dass beim Nachfüllen nicht vollständig geleerter Fachböden das nachgefüllte Material an der Vorderseite zu liegen kommt, so dass immer das zuletzt eingeschobene Material als erstes wieder entnommen wird. In vielen Fällen ist dies nicht nachteilig, da beispielsweise metallische Schrauben kein Verfallsdatum haben. Bei anderen Produkten, wie beispielsweise Kartuschen mit Dichtstoffen, gibt es jedoch ein Verfallsdatum.

Es ist bereits eine Lagerungseinrichtung für Dosen bekannt (US 4105126), bei der die Dosen auf sich zwischen Seitenwänden erstreckenden Fachböden liegen, die von der Rückseite der Lagerungseinrichtung zur Vorderseite hin abfallend ausgebildet sind. Die Dosen können nur an der Vorderseite entnommen werden, und nach Entnahme einer Dose rollen die folgenden Dosen nach.

Der Erfindung liegt die Aufgabe zu Grunde, eine Lagerungseinrichtung zu schaffen, die es ermöglicht, dass die in ihr gelagerten Gegenstände in der gleichen Reihenfolge entnommen werden können, in der sie in die Lagerungseinrichtung eingegeben wurden. Damit soll eine unkontrollierte Lagerung bezüglich des Verfallsdatums der Produkte verhindert werden.

Zur Lösung dieser Aufgabe schlägt die Erfindung eine Lagerungseinrichtung mit den im Anspruch 1 genannten Merkmalen vor. Weiterbildungen der Erfindung sind Gegenstand von Unteransprüchen.

Durch die von der Erfindung vorgeschlagene Lagerungseinrichtung können die Gegenstände, die eine angenähert oder vollständig zylindrische Gestalt haben, nur an einer bestimmten Stelle entnommen werden, und zwar durch die in der Vorderwand angeordnete Öffnung. Es ist natürlich auch denkbar, die Lagerungseinrichtung so hinzustellen, dass die beschriebene Vorderwand an der Seite ist, sofern an dieser Seite der Zugang zu der Entnahmeöffnung möglich ist. Die Seitenwand an der Stelle, an der die tiefste Stelle der Fachböden vorhanden ist, ist so ausgestaltet, dass eine Entnahme hier nicht möglich ist. Dies kann bei nebeneinander stehenden Regalen auch so ausgestaltet sein, dass die Entnahme durch das nebenstehende Regal oder einen daneben stehenden Schrank verhindert wird. Wenn in dem Fachboden mehrere derartige Gegenstände angeordnet sind, so ist es wegen des schrägen Verlaufs auch nicht möglich, Gegenstände durch die Entnahmeöffnung wieder einzubringen, da dort ja immer mindestens ein Gegenstand liegt. Unmittelbar nach Entnahme eines Gegenstands rutscht oder rollt der nächste Gegenstand nach. Es kann daher auch nicht aus Versehen oder durch Manipulationen eine falsche Reihenfolge von Gegenständen erzeugt werden. Nur dann, wenn der Fachboden vollständig geleert ist, wäre es möglich, einen neuen Gegenstand durch die Entnahmeöffnung wieder in den Fachboden einzubringen.

Die Befüllung der Fachböden mit den zu lagernden Gegenständen könnte beispielsweise an der Seitenwand erfolgen, an der die Fachböden ihre höchste Stelle aufweisen. Dies könnte beispielsweise durch eine verschließbare Öffnung oder durch eine aufklappbare Seitenwand bewirkt werden.

Um die Lagerungseinrichtung besonders einfach und universell auszugestalten, schlägt die Erfindung vor, an der Lagerungseinrichtung eine Eingabeöffnung anzuordnen, die im Bereich des höheren Endes jedes Fachbodens angeordnet ist. Durch diese Eingabeöffnung kann dann ein zu lagernder und auszugebender Gegenstand eingebracht werden, der dann den Fachboden hinunter rutscht oder hinunter rollt, bis er an den zuletzt eingegebenen Gegenstand stößt.

Die von der Erfindung vorgeschlagene Lagerungseinrichtung wird so benutzt, dass die Fachböden mit den zu lagernden Gegenständen dadurch versehen werden, dass diese durch die Eingabeöffnung in den Fachboden eingeschoben werden. Dies geschieht solange, bis ein Fachboden gefüllt ist. Die Entnahme kann jetzt jeweils nur an der tiefsten Stelle des Fachbodens durch die dort angeordnete Entnahmeöffnung erfolgen. Es spielt dabei keine Rolle, ob es sich bei den zu lagernden Gegenständen um rollende oder rutschende Gegenstände handelt.

Erfindungsgemäß kann vorgesehen sein, dass die Eingabeöffnung in der Rückwand der Lagerungseinrichtung angeordnet ist. Dies ist insbesondere dann von Interesse, wenn die Lagerungseinrichtung als Verkaufsregal ausgebildet ist, bei dem ein Zugang von der Rückseite her möglich ist.

Es ist aber ebenfalls möglich und liegt im Rahmen der Erfindung, dass die Eingabeöffnung in der Seitenwand der Lagerungseinrichtung angeordnet ist, wenn beispielsweise diese Seitenwand zugänglich ist.

Besonders günstig ist es jedoch, wenn in Weiterbildung der Erfindung die Eingabeöffnung in der Vorderwand angeordnet ist. Die Vorderwand muss auf jeden Fall zugänglich sein, um eine Entnahme zu ermöglichen. Daher ist es besonders sinnvoll, wenn auch die Eingabeöffnung in dieser Vorderwand vorhanden ist. Es lassen sich auf diese Weise auch mehrere Lagerungseinrichtungen als Regale oder dergleichen nebeneinander anordnen.

Um den Füllungszustand der einzelnen Fachböden von der Außenseite her schneller erkennen zu können kann erfindungsgemäß vorgesehen sein, dass die Vorderwand für jeden Fachboden einen sich den Fachboden entlang erstreckenden Schlitz aufweist. Dieser Schlitz muss so schmal sein, dass eine Entnahme oder Manipulation durch ihn hindurch nicht möglich ist. Er sollte aber andererseits so breit sein, dass man die dahinter vorhandenen Gegenstände sehen kann.

In nochmaliger Weiterbildung der Erfindung kann vorgesehen sein, dass der Schlitz in die Entnahmeöffnung und/oder die Eingabeöffnung übergeht. Wenn es sich bei den zu lagernden Gegenständen um Kartuschen für Dichtstoffe oder dergleichen handelt, so besitzen diese in der Regel einen Ansatz an einer Stirnseite, aus dem das Material ausgepresst wird. Dieser Ansatz kann dann durch den Schlitz hindurch greifen, so dass der Platzbedarf innerhalb der Lagerungseinrichtung verringert wird. Der Ansatz ist üblicherweise wesentlich kleiner im Durchmesser als die Kartuschen selbst. Dieses Durchgreifen des schmalen Ansatzes ermöglicht zusätzlich eine verbesserte Kontrolle des Inhalts eines Fachbodens.

In nochmaliger Weiterbildung der Erfindung kann vorgesehen sein, dass in der Seitenwand benachbart zu der Entnahmeöffnung eine Öffnung vorhanden ist, die die Entnahme des Gegenstands erleichtern kann. Zusätzlich ermöglicht diese Öffnung auch eine Sichtkontrolle.

Weitere Merkmale, Einzelheiten und Vorzüge der Erfindung ergeben sich aus der folgenden Beschreibung einer bevorzugten Ausführungsform der Erfindung, den Patentansprüchen und der Zusammenfassung, deren beider Wortlaut durch Bezugnahme zum Inhalt der Beschreibung gemacht wird, sowie anhand der Zeichnung. Hierbei zeigen:
- Figur 1: eine Frontansicht einer Lagerungseinrichtung nach der Erfindung mit ihrer Vorderwand;
- Figur 2: eine Ansicht von links in Figur 1.

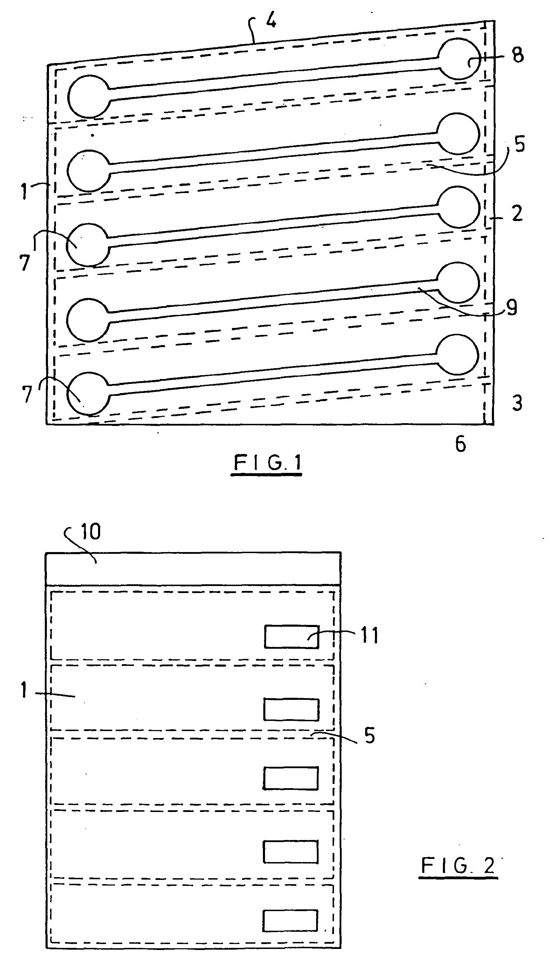

Figur 1 zeigt eine Einrichtung zur Lagerung, Bereitstellung und Ausgabe von Gegenständen. Die Einrichtung ist als Regal aufgebaut und enthält zwei Seitenwände 1, 2, eine in der Figur nicht sichtbare Rückwand und eine Vorderwand 3. Eine der beiden Seitenwände 2 ist größer ausgebildet, ist also höher als die andere Seitenwand 1. Die Vorderwand 3 weist eine insofern unregelmäßige Gestalt auf, als ihre Oberkante 4 schräg verläuft.

In der Einrichtung sind mehrere Fachböden 5 vorhanden, die in der Figur 1 gestrichelt dargestellt sind. Die Fachböden 5 verlaufen parallel zueinander, aber nicht parallel zu der Unterkante 6 der Vorderwand, sondern schräg. Sie fallen von der in Figur 1 rechten Seitenwand 2 zu der linken Seitenwand 1 ab. Der Grad der Neigung der Fachböden hängt von den zu lagernden Gegenständen ab.

Die Vorderwand 3 enthält im Bereich der tiefsten Stelle der Fachböden 5, das heißt in Figur 1 links, jeweils eine Öffnung 7, die kreisrund ausgebildet ist. Die dargestellte Einrichtung ist zur Unterbringung von kreiszylindrischen Gegenständen gedacht. Wenn die Fachböden 5 mit Gegenständen befüllt sind, so können diese jeweils einzeln aus der Entnahmeöffnung 7 herausgenommen werden. Sobald ein Gegenstand aus der Öffnung 7 herausgenommen wurde, können die noch vorhandenen Gegenstände auf dem Fachboden 5 nachrutschen oder nachrollen.

Im Bereich der jeweils höchsten Stelle jedes Fachbodens 5 enthält die Vorderwand 3 jeweils eine ebenfalls kreisrunde Öffnung 8, deren Größe der Entnahmeöffnung 7 entspricht. Durch diese Öffnungen 8 kann jeweils ein einzelner Gegenstand in das Fach oberhalb jedes Fachbodens 5 eingeschoben werden. Sobald der Gegenstand eingeschoben wurde, rutscht er, sofern noch Platz vorhanden ist, den Fachboden 5 hinab, bis er an den nächsten Gegenstand stößt. Bei den Gegenständen mit kreisrundem Querschnitt kann auch ein Rollen des Gegenstands stattfinden.

Bei jedem jeweils einem Fachboden 5 zugeordneten Fach ist in der Vorderwand 3 ein den Fachboden 5 entlang verlaufender Schlitz 9 gebildet, der in die beiden Öffnungen 7,8 übergeht. Der Schlitz ist bezüglich der Öffnungen 7, 8 mittig angeordnet, so dass eine Verlängerung durch den Mittelpunkt der beiden kreisrunden Öffnungen geht. Bei Kartuschen, die an ihrer Stirnseite einen schmalen Ansatz zum Auspressen ihres Inhalts haben, können diese schmalen Ansätze durch den Schlitz 9 durchgreifen, so dass die Lagerungseinrichtung nur eine Tiefe aufweisen muss, die der Länge der Kartuschen ohne Ansatz entspricht. Zusätzlich ermöglicht der Schlitz 9 auch bei anderen Gegenständen eine Sichtkontrolle des Inhalts jedes Fachs.

Figur 2 zeigt die Lagerungseinrichtung der Figur 1 von links in Figur 1, also die Seitenwand 1 vorne, sowie an der Oberseite eine obere Abdeckung 10. In der Seitenwand 1 ist im Bereich der rechten Kante, also unmittelbar benachbart zu den Entnahmeöffnungen 7, eine weitere rechteckige Öffnung 11 ausgebildet. Wenn die Seitenwand 1 für einen Benutzer zugänglich ist, so kann er durch diese Öffnung 11 hindurch greifen, um das Herausschieben eines Gegenstands aus der Entnahmeöffnung 7 zu erleichtern. Dies gilt insbesondere bei solchen Gegenständen, die an ihrer durch die Öffnung 7 zugänglichen Stirnseite keine Möglichkeit zum Anfassen haben. Hier kann der Benutzer durch die Öffnung 11 eine gewisse Verschiebung nach vorne ermöglichen, so dass man dann durch die Öffnung 7 besser anfassen kann.

Die Lagerungseinrichtung weist an ihrer Oberseite eine Abdeckung 10 auf, um auch im obersten Fach keinen anderen Zugriff auf den Inhalt zu ermöglichen als durch die Entnahmeöffnung 7.

Die Lagerungseinrichtung macht es unmöglich, einen neuen Gegenstand in einen Fachboden an einer anderen Stelle als durch die Eingabeöffnung 8 einzubringen. Nur dann, wenn der Fachboden vollständig leer ist, kann ein einzelner Gegenstand auch durch eine Entnahmeöffnung 7 eingeschoben werden. Dies stört dann aber nicht.

Die Lagerungseinrichtung macht es ebenfalls unmöglich, einen Gegenstand an einer anderen Stelle als durch die Entnahmeöffnung 7 zu entnehmen.

Dadurch wird es möglich, dafür zu sorgen, dass die Gegenstände aus der Lagerungseinrichtung in der gleichen Reihenfolge entnommen werden, in der sie in die Lagerungseinrichtung eingeführt wurden. Dies hat insbesondere bei solchen Gegenständen große Vorteile, die ein Verfallsdatum haben.

## Patentansprüche

1. Einrichtung zur Lagerung, Bereitstellung und Ausgabe von zylindrischen oder angenähert zylindrischen Gegenständen, mit
1.1 zwei Seitenwänden (1,2),
1.2 mehreren Fachböden (5), die
1.2.1 sich zwischen den Seitenwänden (1,2) erstrecken und
1.2.2 von der einen zu der gegenüberliegenden Seitenwand abfallend angeordnet sind, sowie mit
1.3 einer Vorderwand (3), die
1.3.1 mindestens im Bereich des tiefsten Endes jedes Fachbodens (5) eine Entnahme Öffnung (7) aufweist,
1.3.2 durch die ein Gegenstand hindurch passt, während
1.3.3 die Vorderwand (3) derart ausgebildet ist, dass sie eine Entnahme eines Gegenstands in ihrem übrigen Bereich verhindert.

2. Einrichtung nach Anspruch 1, mit einer Eingabeöffnung (8) im Bereich des höheren Endes jedes Fachbodens (5).

3. Einrichtung nach Anspruch 2, bei der mindestens eine Eingabeöffnung (8) in einer Rückwand der Lagerungseinrichtung angeordnet ist.

4. Einrichtung nach Anspruch 2 oder 3, bei der mindestens eine Eingabeöffnung (8) in der Vorderwand (3) angeordnet ist.

5. Einrichtung nach einem der Ansprüche 2 bis 4, bei der mindestens eine Eingabeöffnung (8) in der Seitenwand (2) angeordnet ist.

6. Einrichtung nach einem der vorhergehenden Ansprüche, mit für mindestens einen Fachboden (5) einen sich den Fachboden (5) entlang erstreckenden Schlitz (9) in der Vorderwand (3).

7. Einrichtung nach Anspruch 6, bei der der Schlitz (9) in die Entnahmeöffnung (7) und/oder in die Eingabeöffnung (8) übergeht.

8. Einrichtung nach einem der vorhergehenden Ansprüche, mit mindestens einer Öffnung (11) in der Seitenwand (1) benachbart zu der Entnahmeöffnung (7).

## Claims

1. Means for storage, provision and discharge of cylindrical or approximately cylindrical articles, with
1.1 two side walls (1, 2),
1.2 several shelves (5), which
1.2.1 extend between the side walls (1, 2) and
1.2.2 are affixed in an inclined manner from one side to the opposite side wall, and with
1.3 a front wall (3), wherein
1.3.1 the area around the lowest end of each shelf (5) exhibits at least a discharge outlet (7),
1.3.2 through which an article fits, whereas
1.3.3 the front wall (3) is formed in such a manner that it hinders the removal of an article in its remaining area.

2. Means according to Claim 1 with an input opening (8) in the high-end area of each shelf (5).

3. Means according to Claim 2 wherein at least one input opening (8) is located in a rear wall of the storage means.

4. Means according to Claim 2 or 3 wherein at least one input opening (8) is located in a front wall (3).

5. Means according to one of Claims 2 to 4 wherein at least one input opening (8) is located in the side wall (2).

6. Means according to one of the preceding claims wherein a slot (9) stretches along the front wall (3) of the shelf (5) for at least one shelf (5).

7. Means according to Claim 6 wherein the slot (9) blends into the discharge outlet (7) and/or into the input opening (8).

8. Means according to one of the preceding claims wherein at least one opening (11) in the side wall (1) is adjacent to the discharge outlet (7).

## Revendications

1. Dispositif destiné au stockage, à la fourniture et à la distribution d'objets cylindriques ou approximativement cylindriques, comprenant
1.1 deux parois latérales (1, 2)
1.2 plusieurs tablettes (5) qui
1.2.1 s'étendent entre les parois latérales (1, 2) et
1.2.2 sont disposées de manière inclinée d'une paroi latérale à l'autre paroi latérale opposée, ainsi qu'
1.3 une paroi avant (3) qui
1.3.1 présente une ouverture de prélèvement (7) au moins dans la partie de l'extrémité la plus basse de chaque tablette (5),
1.3.2 à travers laquelle passe un objet, alors que
1.3.3 la paroi avant (3) est exécutée de telle manière qu'elle empêche le prélèvement d'un objet dans sa partie restante.

2. Dispositif selon la revendication 1, présentant une ouverture d'introduction (8) dans la partie de l'extrémité plus élevée de chaque tablette (5).

3. Dispositif selon la revendication 2, dans lequel au moins une ouverture d'introduction (8) est disposée dans une paroi arrière du dispositif de stockage.

4. Dispositif selon la revendication 2 ou 3, dans lequel au moins une ouverture d'introduction (8) est disposée dans la paroi avant (3).

5. Dispositif selon l'une quelconque des revendications 2 à 4, dans lequel au moins une ouverture d'introduction (8) est disposée dans la paroi latérale (2).

6. Dispositif selon l'une quelconque des revendications précédentes, comprenant une fente (9) dans la paroi avant (3), s'étendant le long des tablettes (5), pour au moins une tablette (5).

7. Dispositif selon la revendication 6, dans lequel la fente (9) se transforme en ouverture de prélèvement (7) et/ou en ouverture d'introduction (8).

8. Dispositif selon l'une quelconque des revendications précédentes, comprenant au moins une ouverture (11) dans la paroi latérale, adjacente à l'ouverture de prélèvement (7).
